# EUROPÄISCHE PATENTSCHRIFT

(11) **EP 1 790 521 B1**
(45) Veröffentlichungstag und Bekanntmachung des Hinweises auf die Patenterteilung: **05.08.2009**
(21) Anmeldenummer: 06021104.2
(22) Anmeldetag: 07.10.2006
(51) Int. Cl.: B60N 2/015, B64D 11/06

(54) **Verstellbare Sitzhalterung für einen Fahrgastsitz**
Adjustable seat support for a passenger seat
Support ajustable pour un siège de passager

(30) Priorität: 23.11.2005 DE 202005018261 U
(43) Veröffentlichungstag der Anmeldung: 30.05.2007
(73) Patentinhaber: Hermann Schnierle GmbH, 86368 Gersthofen (DE)
(72) Erfinder: Schnierle, Martin, 86368 Gersthofen (DE)
(74) Vertreter: Schwarz, Thomas

(56) Entgegenhaltungen:
- EP-A1- 0 053 923
- US-A- 4 114 947
- US-A- 5 871 318

## Beschreibung

Die Erfindung betrifft eine verstellbare Sitzhalterung für einen Fahrgastsitz, insbesondere für einen Omnibussitz, nach dem Oberbegriff des Anspruchs 1.

Eine derartige Sitzhalterung ist aus der EP 0 053 923 A1 bekannt. Zur verstellbaren Halterung eines Fahrgastsitzes auf einer Bodenschiene sind dort an einem z.B. als Gussteil ausgeführten stabilen Fußteil zwei nach unten ragende Führungsbolzen zum Eingriff in Führungsnuten der Bodenschiene vorgesehen. Zwischen den beiden Führungsbolzen ist an dem Fußteil ferner ein axial verstellbarer Arretierbolzen zum Eingriff in Arretieröffnungen der Bodenschiene angeordnet. Der Arretierbolzen ist durch eine separate Druckfeder nach unten vorgespannt und durch einen relativ aufwändigen Verstellmechanismus betätigbar.

Aufgabe der Erfindung ist es, eine verstellbare Sitzhalterung der eingangs genannten Art zu schaffen, die eine einfache Verstellung ermöglicht und mit geringem Bauaufwand eine genaue und sichere Halterung gewährleistet.

Diese Aufgabe wird durch eine verstellbare Sitzhalterung mit den Merkmalen des Anspruchs 1 gelöst. Zweckmäßige Weiterbildungen und vorteilhafte Ausführungsformen der Erfindung sind Gegenstand der Unteransprüche.

Bei der erfindungsgemäßen Sitzhalterung übernimmt der mindestens eine Arretierbolzen eine Doppelfunktion. Zum einen greift er in eine entsprechende Arretieröffnung der Bodenschiene ein und sorgt somit für eine genaue Positionierung. Zum anderen werden über den Arretierbolzen die Führungsbolzen innerhalb der Führungsschiene axial verspannt, wodurch eine spielfreie Fixierung der Sitzhalterung innerhalb der Bodenschiene gewährleistet wird. Durch den oder die Arretierbolzen werden die an der Unterseite der Fußplatte vorstehenden Führungsbolzen nach oben gezogen und gelangen mit ihrem vergrößerten Kopf zur Anlage an der Unterseite nach innen ragender Stege der Bodenschiene. Dadurch wird eine spielfreie Halterung innerhalb der Bodenschiene erreicht. Die Fußplatte wirkt dabei als Feder und sorgt dafür, dass die Führungsbolzen unter Spannung gehalten werden.

In einer besonders zweckmäßigen Ausführung weist der Arretierbolzen einen unteren Zapfen zum Eingriff in die Arretieröffnungen der Bodenschiene und einen oberen Ringbund zur Abstützung auf der Oberseite der Bodenschiene auf. Dadurch kann die Fußplatte nach oben gebogen werden.

Die Fußplatte weist an ihren Enden vorzugsweise verbreiterte Auflagebereiche und dazwischen einen schlankeren Verbindungsbereich mit seitlich vorstehenden Ansätzen für die Aufnahme zweier beabstandeter Arretierbolzen auf. Die Arretierbolzen sind im wesentlichen in der Mitte der Fußplatte angeordnet. Dadurch kann eine gleichmäßige Durchbiegung der Fußplatte erreicht werden.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine verstellbare Sitzhalterung in einer Vorderansicht;
- **Figur 2**: die verstellbare Sitzhalterung von Figur 1 in einer Seitenansicht;
- **Figur 3**: die verstellbare Sitzhalterung von Figur 1 in einer Draufsicht;
- **Figur 4**: die verstellbare Sitzhalterung von Figur 1 in einer Unteransicht;
- **Figur 5**: eine vergrößerte Teilansicht eines Arretierbolzens der Sitzhalterung von Figur 1 und
- **Figur 6**: einen Teil einer Bodenschiene in einer Draufsicht.

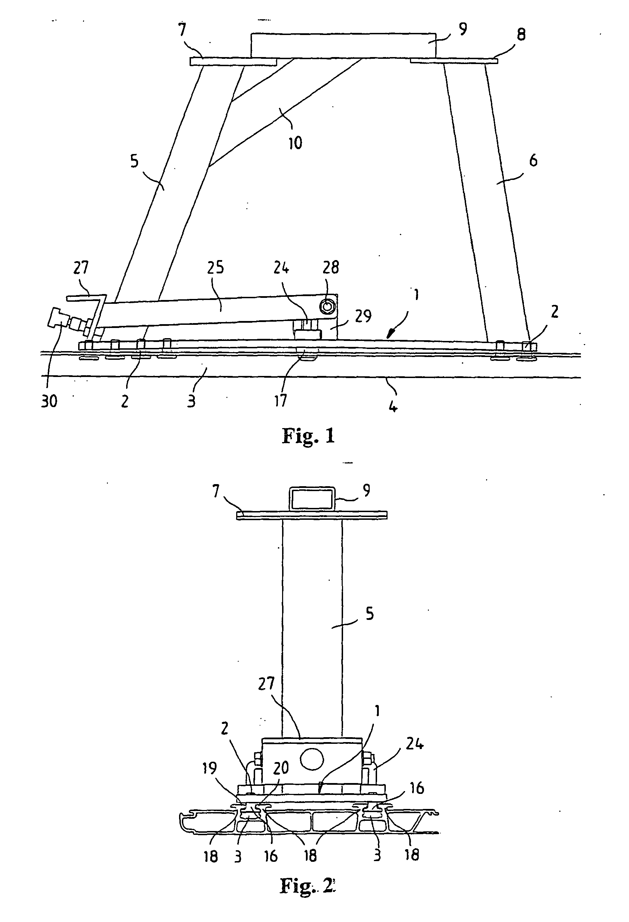

Die in den Figuren 1 und 2 in einer Seiten- und Vorderansicht schematisch dargestellte Sitzhalterung enthält eine Fußplatte 1, an der mehrere nach unten ragende Führungsbolzen 2 zum Eingriff in Führungsnuten 3 einer Bodenschiene 4 angeordnet sind. Auf der Fußplatte 1 sind zwei schräg nach oben verlaufende Stützen 5 und 6 für einen Fahrgastsitz befestigt. Die beiden Stützen 5 und 6 weisen an ihren oberen Enden jeweils eine Auflageplatte 7 bzw. 8 auf und sind durch einen Querträger 9 miteinander verbunden. Der Querträger 9 ist durch eine zusätzliche schräge Strebe 10 an der in Figur 1 linken Stütze 5 abgestützt. Die beiden Stützen 5 und 6, der Querträger 9 und die Strebe 10 bestehen zweckmäßigerweise aus Rechteckprofilrohren, die miteinander bzw. mit der Fußplatte 1 und den Auflageplatten 7 und 8 verschweißt sind.

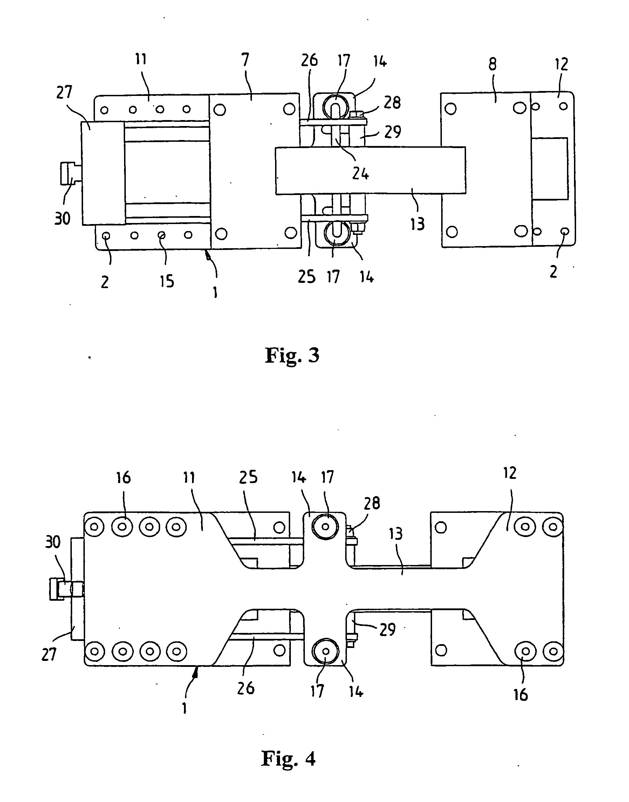

Wie aus den Figuren 3 und 4 hervorgeht, weist die Fußplatte 1 an ihren Enden verbreiterte Auflagebereiche 11 bzw. 12 und dazwischen einen schlankeren Verbindungsbereich 13 mit zwei zu beiden Seiten vorstehenden Ansätzen 14 auf. An den gegenüberliegenden Längsseiten der beiden Auflagebereiche 11 und 12 sind die nach unten vorstehenden Führungsbolzen 2 angeordnet. Beim gezeigten Ausführungsbeispiel sind in dem linken Auflagebereich 11 auf jeder Seite jeweils vier und im rechten Auflagerbereich 12 jeweils zwei in einer Reihe nebeneinander angeordnete Führungsbolzen 2 vorgesehen. Die Führungsbolzen 2 sind in entsprechende Gewindebohrungen 15 der Fußplatte 1 von unten eingeschraubt und weisen an ihrem nach unten vorstehenden Ende einen verbreiterten Kopf 16 auf. In den beiden seitlich vorstehenden Ansätzen 14 in jeweils ein im Folgenden noch näher erläuterter Arretierbolzen 17 axial verschiebbar geführt.

Die Führungsbolzen 2 greifen mit ihrem verbreiterten Kopf 16 in zwei zueinander parallele Führungsnuten 3 der in Figur 2 dargestellten Bodenschiene 4 ein. Die nach oben offenen Führungsnuten 3 werden an der Oberseite der Bodenschiene 4 durch schienenförmige Erhebungen 18 mit nach innen ragenden Stegen 19 und 20 auf beiden Seiten begrenzt. Durch die Stege 19 und 20 wird ein Herausziehen der Führungsbolzen 2 aus den Führungsnuten 3 nach oben verhindert.

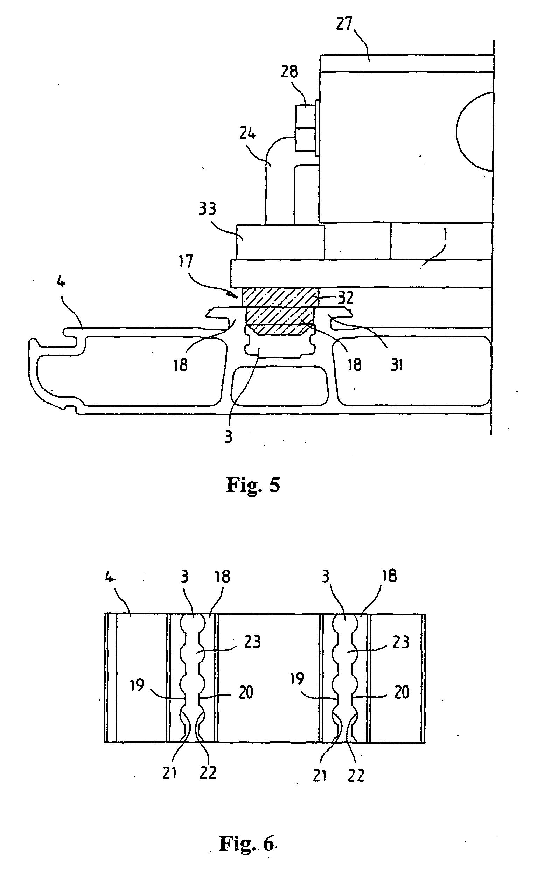

Aus Figur 6 geht hervor, dass in den nach innen ragenden Stegen 19 und 20 der schienenförmigen Erhebungen 18 der Bodenschiene 4 in vorgegebenen Abständen einander gegenüberliegende Einbuchtungen 21 und 22 vorgesehen sind, die zusammen Arretieröffnungen 23 für die Arretierbolzen 17 bilden. Der Abstand der Arretieröffnungen 23 entspricht dem Abstand der Führungsbolzen 2 und der Durchmesser der Arretieröffnungen 23 ist etwas größer als der Durchmesser des Kopfs 16 der Führungsbolzen 2, so dass die nach unten ragenden Führungsbolzen 2 in die Arretieröffnungen 23 eingesetzt werden können. Die beiden Arretierbolzen 17 sind derart angeordnet, dass sich die Führungsbolzen 2 zwischen den Arretieröffnungen 23 befinden, wenn die beiden Arretierbolzen 17 in die Arretieröffnungen 23 eingreifen. In dieser Stellung sind die Führungsbolzen 2 durch die Stege 19 und 20 nach oben gesichert.

Wie besonders aus Figur 3 hervorgeht, sind die beiden Arretierbolzen 17 durch eine beidseitig abgewinkelte Querstange 24 miteinander verbunden und können durch eine Hebelanordnung gemeinsam axial verstellt werden. Die Hebelanordnung besteht aus zwei Hebelarmen 25 und 26, die mit Hilfe eines Griffstücks 27 um eine Querachse 28 verschwenkbar sind. Die Querachse 28 ist in einer etwa in der Mitte der Fußplatte 1 angeordneten - in Figur 1 erkennbaren - Trägerstütze 29 drehbar geführt. Hinter der Querachse 28 ist die Querstange 24 an den beiden Hebelarmen 25 und 26 derart angelenkt, dass die beiden Arretierbolzen 17 beim nach unten Drücken des Griffstücks 27 ebenfalls nach unten gedrückt und durch Anheben des Griffstücks 26 nach oben gezogen werden können. An dem Griffstück 27 ist ein federbelasteter Druckknopf 30 angebracht, der in eine entsprechende Bohrung an der Stütze 5 eingerastet werden kann. Dadurch kann die Hebelanordnung mit den beiden Arretierbolzen 17 in der in Figur 1 dargestellten Verriegelungsstellung fixiert werden.

Die beiden Arretierbolzen 17 weisen einen in Figur 5 dargestellten unteren Zapfen 31 zum Eingriff in die Arretieröffnungen 23 und einen oberen Ringbund 32 zur Abstützung auf der Oberseite der Bodenschiene 4 auf. Bei der gezeigten Ausführung liegt der Arretierbolzen 17 mit seinem Ringbund 32 auf den beiden schienenförmigen Erhebungen 18 auf. Auf der Fußplatte 1 sind Führungsringe 33 zur verbesserten Führung der axial beweglichen Arretierbolzen 17 angeordnet. Der Durchmesser des Ringbunds 32 ist größer als der Durchmesser der Arretieröffnungen 23, so dass der Arretierbolzen 17 beim Eingriff in die Arretieröffnungen 23 mit seinem oberen Ringbund zur Auflage auf den schienenförmigen Erhebungen 18 gelangt. Wenn die Arretierbolzen 17 nach ihrer Auflage auf der Bodenschiene 4 mit Hilfe der Hebelanordnung weiter nach unten gedrückt werden, wird die Fußplatte 1 nach oben gebogen, wie dies in Figur 1 gezeigt ist. Dabei werden die Führungsbolzen 2 nach oben gegen die Unterseite der nach innen ragenden Stege 19 und 20 gezogen, wodurch eine spielfrei Halterung der Sitzhalterung gegenüber der Bodenschiene 4 erreicht wird. Durch den federbelasteten Druckkopf 30 können die Arretierbolzen 17 über die Hebelanordnung in der nach unten gedrückten Stellung gehalten werden. Die nach oben gebogene Fußplatte 1 wirkt dabei als Feder und sorgt für die Vorspannung der Führungsbolzen 2.

Die Erfindung ist nicht auf das vorstehend beschriebene und in der Zeichnung dargestellte Ausführungsbeispiel beschränkt. So können z.B. anstelle der Hebelanordnung auch andere Verstellmechanismen für die axiale Verstellung der Arretierbolzen vorgesehen sein. Statt der beim Ausführungsbeispiel vorhandenen zwei Arretierbolzen können auch nur ein oder mehr als zwei Arretierbolzen vorgesehen sein.

## Patentansprüche

1. Verstellbare Sitzhalterung für einen Fahrgastsitz, insbesondere einen Omnibussitz, mit einem Fußteil, an dem mehrere nach unten ragende Führungsbolzen (2) zum Eingriff in Führungsnuten (3) einer Bodenschiene (4) und mindestens ein axial verstellbarer Arretierbolzen (17) zum Eingriff in Arretieröffnungen (23) der Bodenschiene (4) und zur axialen Verspannung der Führungsbolzen (2) innerhalb der Führungsnuten (3) angeordnet sind, **dadurch gekennzeichnet, dass** das Fußteil als biegsame Fußplatte (1) ausgebildet ist.

2. Verstellbare Sitzhalterung nach Anspruch 1, **dadurch gekennzeichnet, dass** der mindestens eine Arretierbolzen (17) einen unteren Zapfen (31) zum Eingriff in die Arretieröffnungen (23) der Bodenschiene (4) und einen oberen Ringbund (32) zur Abstützung auf der Oberseite der Bodenschiene (4) enthält.

3. Verstellbare Sitzhalterung nach Anspruch 1 oder 2, **dadurch gekennzeichnet, dass** der mindestens eine Arretierbolzen (17) in einem auf der Fußplatte (1) angeordneten Führungsring (33) verschiebbar geführt ist.

4. Verstellbare Sitzhalterung nach einem der Ansprüche 1 bis 3, **dadurch gekennzeichnet, dass** in der Fußplatte (1) zwei einander gegenüberliegende Arretierbolzen (17) angeordnet sind.

5. Verstellbare Sitzhalterung nach Anspruch 4, **dadurch gekennzeichnet, dass** die beiden Arretierbolzen (17) durch eine Hebelanordnung (25, 26, 27, 28) gemeinsam axial verstellbar sind.

6. Verstellbare Sitzhalterung nach Anspruch 5, **dadurch gekennzeichnet, dass** die Hebelanordnung (25, 26, 27, 28) zwei mit Hilfe eines Griffstücks (27) um eine Querachse (28) verschwenkbare Hebelarme (25, 26) umfasst.

7. Verstellbare Sitzhalterung nach Anspruch 6, **dadurch gekennzeichnet, dass** die Querachse (28) in einer etwa in der Mitte der Fußplatte (1) angeordneten Trägerstütze (29) drehbar geführt ist.

8. Verstellbare Sitzhalterung nach Anspruch 6 oder 7, **dadurch gekennzeichnet, dass** die beiden Arretierbolzen (17) durch eine mit den Hebelarmen (25, 26) gelenkig verbundene Querstange (24) miteinander verbunden sind.

9. Verstellbare Sitzhalterung nach einem der Ansprüche 6 bis 8, **dadurch gekennzeichnet, dass** an dem Griffstück (27) ein federbelasteter Druckkopf (30) zur Fixierung der Hebelanordnung (25, 26, 27, 28) in einer Verriegelungsstellung angeordnet ist.

10. Verstellbare Sitzhalterung nach einem der Ansprüche 1 bis 9, **dadurch gekennzeichnet, dass** die Fußplatte (1) verbreiterte Auflagebereiche (11, 12) und dazwischen einen schlankeren Verbindungsbereich (13) mit zwei seitlich vorstehenden Ansätzen (14) für die Arretierbolzen (17) aufweist.

11. Verstellbare Sitzhalterung nach Anspruch 10, **dadurch gekennzeichnet, dass** die Führungsbolzen (2) an den gegenüberliegenden Längsseiten der Auflagerbereiche (11, 12) angeordnet sind.

12. Verstellbare Sitzhalterung nach Anspruch 11, **dadurch gekennzeichnet, dass** an dem einen Auflagerbereich (11) jeweils vier und am anderen Auflagerbereich (12) jeweils zwei in einer Reihe angeordnete Führungsbolzen (2) auf jeder Seite vorgesehen sind.

13. Verstellbare Sitzhalterung nach einem der Ansprüche 1 bis 12, **dadurch gekennzeichnet, dass** die Führungsbolzen (2) an ihrem nach unten vorstehenden Ende einen verbreiterten Kopf (16) zur Anlage an der Unterseite nach innen ragender Stege (19, 20) der Bodenschiene (4) aufweisen.

14. Verstellbare Sitzhalterung nach einem der Ansprüche 1 bis 13, **dadurch gekennzeichnet, dass** auf der Fußplatte (1) zwei schräg nach oben ragende und durch einen Querträger (9) miteinander verbundene Stützen (5, 6) befestigt sind.

## Claims

1. Adjustable seat support for a passenger seat, in particular an omnibus seat, with a foot part, on which are arranged a plurality of downwardly projecting guide pins (2) for engagement in guide grooves (3) of a base rail (4) and at least one axially adjustable locking pin (17) for engagement in locking openings (23) of the base rail (4) and for the axial bracing of the guide pins (2) within the guide grooves (3), **characterised in that** the foot part is configured as a flexible foot plate (1).

2. Adjustable seat support according to claim 1, **characterised in that** the at least one locking pin (17) contains a lower journal (31) for engagement in the locking openings (23) of the base rail (4), and an upper annular collar (32) for supporting on the upper side of the base rail (4).

3. Adjustable seat support according to claim 1 or 2, **characterised in that** the at least one locking pin (17) is displaceably guided in a guide ring (33) arranged on the foot plate (1).

4. Adjustable seat support according to any one of claims 1 to 3, **characterised in that** two mutually opposing locking pins (17) are arranged in the foot plate (1).

5. Adjustable seat support according to claim 4, **characterised in that** the two locking pins (17) can be axially adjusted together by a lever arrangement (25, 26, 27, 28).

6. Adjustable seat support according to claim 5, **characterised in that** the lever arrangement (25, 26, 27, 28) comprises two lever arms (25, 26) which can be pivoted about a transverse axle (28) with the aid of a handle piece (27).

7. Adjustable seat support according to claim 6, **characterised in that** the transverse axle (28) is rotatably guided in a support bearing (29) arranged approximately in the centre of the foot plate (1).

8. Adjustable seat support according to claim 6 or 7, **characterised in that** the two locking pins (17) are connected to one another by a transverse rod (24) articulated to the lever arms (25, 26).

9. Adjustable seat support according to any one of claims 6 to 8, **characterised in that** a spring-loaded push button (30) is arranged on the handle piece (27) to fix the lever arrangement (25, 26, 27, 28) in a locking position.

10. Adjustable seat support according to any one of claims 1 to 9, **characterised in that** the foot plate (1) has widened supporting regions (11, 12) and a slimmer connecting region (13) in between with two laterally projecting lugs (14) for the locking pins (17).

11. Adjustable seat support according to claim 10, **characterised in that** the guide pins (2) are arranged on the opposing longitudinal sides of the supporting regions (11, 12).

12. Adjustable seat support according to claim 11, **characterised in that** four guide pins (2) arranged in a row are provided in each case on one supporting region (11) and two guide pins (2) arranged in a row are provided in each case on the other supporting region (12), on each side.

13. Adjustable seat support according to any one of claims 1 to 12, **characterised in that** the guide pins (2), on their downwardly projecting end, have a widened head (16) for resting on the lower side of inwardly projecting webs (19, 20) of the base rail (4).

14. Adjustable seat support according to any one of claims 1 to 13, **characterised in that** two bearings (5, 6) connected to one another by a crossbeam (9) and projecting obliquely upwardly are fastened to the foot plate (1).

## Revendications

1. Support ajustable pour un siège de passager, en particulier un siège d'omnibus, avec un pied sur lequel sont disposés plusieurs boulons de guidage (2) saillant vers le bas, devant être introduits dans la fente (3) d'un rail au sol (4) et avec au moins un boulon d'arrêt (17)réglable axialement, à introduire dans des ouvertures d'arrêt (23) du rail au sol (4) et servant à tendre axialement les boulons de guidage (2) à l'intérieur de la fente (3), **caractérisé en ce que** le pied consiste en une plaque flexible (1).

2. Support ajustable de siège selon la revendication 1, **caractérisé en ce que** le boulon d'arrêt (17), au moins au nombre de un, comporte une cheville inférieure (31) entrant dans l'ouverture d'arrêt (23) du rail au sol (4) et un collier (32) servant à l'appui sur le côté supérieur du rail au sol (4).

3. Support ajustable pour siège selon la revendication 1 ou 2, **caractérisé en ce que** le boulon d'arrêt (17), au moins au nombre de un, se déplace dans une bague de guidage (33) disposée sur la plaque (1).

4. Support ajustable pour siège selon l'une des revendications 1 à 3, **caractérisé en ce que** dans la plaque (1), sont disposés deux boulons d'arrêt (17) l'un en face de l'autre.

5. Support ajustable de siège selon la revendication 4, **caractérisé en ce que** les deux boulons d'arrêt (17) sont simultanément ajustable axialement grâce à une disposition de leviers (25, 26, 27, 28).

6. Support ajustable de siège selon la revendication 5, **caractérisé en ce que** la disposition de leviers (25, 26, 27, 28) englobe deux bras (25, 26) basculants sur un axe transversale (28) à l'aide d'une poignée (27).

7. Support ajustable de siège selon la revendication 6, **caractérisé en ce que** l'axe transversale (28) bouge en rotation dans un pilier (29) situé à peu près au centre de la plaque (1).

8. Support ajustable de siège selon la revendication 6 ou 7, **caractérisé en ce que** les deux boulons d'arrêt (17) sont reliés l'un à l'autre par une tige transversale (24) articulée, reliée elle-même aux leviers (25, 26).

9. Support ajustable pour siège selon l'une des revendications 6 à 8, **caractérisé en ce que** sur la poignée (27) est disposé un poussoir sur ressort (30) servant à fixer la disposition de leviers (25, 26, 27, 28) dans une position verrouillée.

10. Support ajustable pour siège selon l'une des revendications 1 à 9,
**caractérisé en ce que** la plaque (1) présente des zones de portée (11, 12) et entre celles-ci une zone de liaison plus étroite (13) avec deux embout saillant latéralement (14) pour les boulons d'arrêt (17).

11. Support ajustable de siège selon la revendication 10**, caractérisé en ce**
**que** les boulons de guidage (2) sont disposés sur les côtés longitudinaux des zones de portée (11, 12), situés en face.

12. Support ajustable de siège selon la revendication 11, **caractérisé en ce**
**que** quatre boulons de guidage (2) alignés sont disposés sur chaque côté de la zone de portée (11) et deux sur chaque côté de la zone de portée (12).

13. Support ajustable pour siège selon l'une des revendications 1 à 12,
**caractérisé en ce que** les boulons de guidage (2) présentent une tête élargie (16) à leur extrémité saillant vers le bas, servant à la pose sur le côté inférieur des garnitures (19, 20) des rails au sol (4) dépassant vers l'intérieur.

14. Support ajustable pour siège selon l'une des revendications 1 à 13,
**caractérisé en ce que** sur la plaque (1), sont fixés deux piliers (5, 6) se dressant en oblique et reliés l'un à l'autre par une barre transversale (9).
